# EUROPEAN PATENT SPECIFICATION

(11) **EP 4 400 340 B1**
(45) Date of publication and mention of the grant of the patent: **04.11.2026**
(21) Application number: 23216776.7
(22) Date of filing: 14.12.2023
(51) Int. Cl.: B60G 3/20, B60G 7/00

(54) **VEHICLE HAVING A REAR SUSPENSION STRUCTURE**
FAHRZEUG MIT EINER HINTERRADAUFHÄNGUNGSSTRUKTUR
VÉHICULE ÉQUIPÉ D'UNE STRUCTURE DE SUSPENSION ARRIÈRE

(30) Priority: 10.01.2023 JP 2023001777
(43) Date of publication of application: 17.07.2024
(73) Proprietor: Suzuki Motor Corporation, Hamamatsu-shi, Shizuoka 432-8611 (JP)
(72) Inventor: YUASA, Koji, Hamamatsu-shi, 432-8611 (JP)
(74) Representative: Plasseraud IP

(56) References cited:
- WO-A1-2009/096094
- GB-A- 2 287 918

## Description

### [Technical Field]

The present invention relates to a vehicle.

### [Background Art]

A suspension structure disclosed in Patent Document 1 is known as an example of a rear suspension structure for a vehicle, which is used as a suspension structure for rear wheels in a four-wheel vehicle. The suspension structure disclosed in Patent Document 1 includes: an axle member (also referred to as knuckle) that rotatably supports a rear wheel; two upper arms serving as connecting elements between an upper portion of the axle member and a vehicle body; and two lower arms that connect a lower portion of the axle member and the vehicle body, below the two upper arms. In addition, a lower end of a coil spring is connected to the front lower arm of the two lower arms, and an upper end of the coil spring is connected to the vehicle body.

### [Citation List]

### [Patent Literature]

[Patent Literature 1] JP 2007-168517 A

### [Summary of Invention]

### [Problem to be Solved by the Invention]

Incidentally, there are many cases in which equipment such as a large battery and an electric motor are set closer to a rear side of a bottom portion of the vehicle, along with a recent trend toward electric vehicles and the like. However, in the suspension structure as disclosed in Patent Document 1, a plurality of arms extends inward from the axle member (knuckle), which limits the layout and size of equipment such as the battery, and accordingly, it may be required to reconfigure the rear suspension structure.
Besides, WO 2009096094 discloses a suspension system for a vehicle including: a stabilizer apparatus, a pair of hydraulic shock absorbers and a control device.
GB 2 287 918 discloses a vehicle suspension has a front lateral link provided under a trailing link and a shock absorber provided at the front lateral link.

In view of the above problem, an object of the present invention is to provide a vehicle, which can improve a flexibility in the layout and size of equipment such as the battery that can be arranged closer to the rear side of the bottom portion of the vehicle.

### [Means for Solving the Problem]

The present invention relates to a vehicle as recited in claim 1.

### [Advantageous Effects of Invention]

According to the present invention, it is possible to provide a vehicle having a rear suspension structure, which can improve a flexibility in the layout and size of equipment such as the battery that may be arranged closer to the rear side of the bottom portion of the vehicle.

### [Brief Description of Drawings]

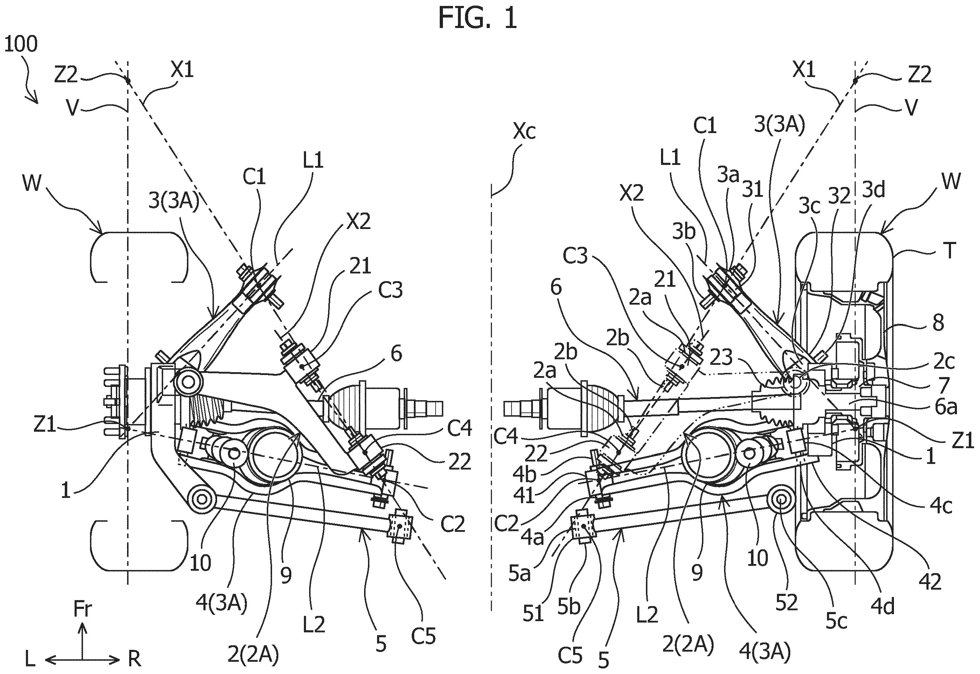

[Figure 1] Figure 1 is a view of a rear suspension structure of a vehicle according to an embodiment of the present invention, when viewed from above the vehicle; and a left half is a top plan view and most of a right side including a rear wheel is a horizontal cross-sectional view passing through a center of a radial direction of the rear wheel.

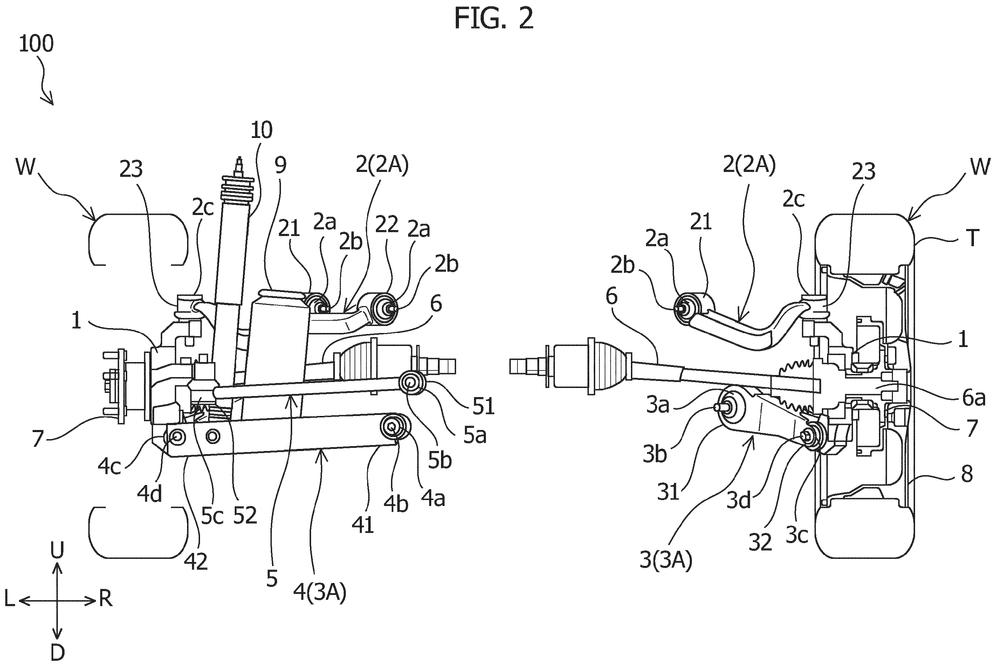

[Figure 2] Figure 2 is a view of the rear suspension structure of the vehicle, when viewed from a rear side of the vehicle, and in which a left half is a rear view and most of a right side including the rear wheel is a vertical cross-sectional view passing through the center of the radial direction of the rear wheel.

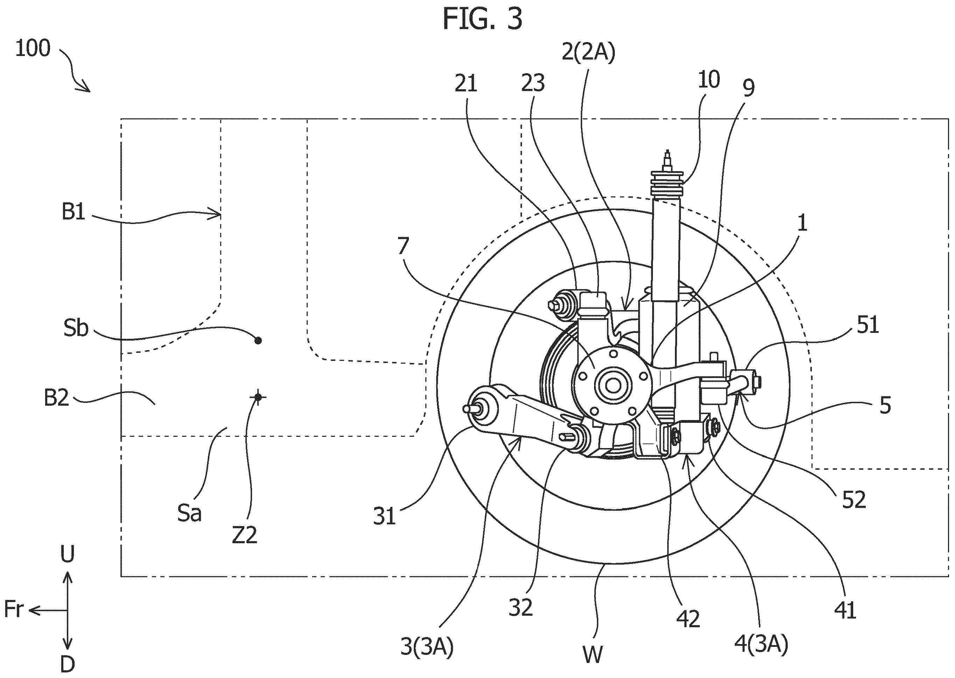

[Figure 3] Figure 3 is a side view of the rear suspension structure of the vehicle, when viewed from an outer side of a vehicle width direction.

### [Mode for Carrying Out the Invention]

Embodiments according to the present invention will be described below with reference to the accompanying drawings.

Figure 1 is a view of a rear suspension structure of a vehicle according to an embodiment of the present invention, when viewed from above the vehicle, and Figure 2 is a view of the rear suspension structure of the vehicle, when viewed from the rear side of the vehicle. The left half of Figure 1 is a top plan view, and most of the right side including the rear wheel of Figure 1 is a horizontal cross-sectional view which passes through the center of the rear wheel of the vehicle in a radial direction; and the left half of Figure 2 is a rear view, and most of the right side including the rear wheel of Figure 2 is a vertical cross-sectional view passing through the center of the rear wheel in the radial direction. Note that, in Figure 1 and Figure 2, the inner structure of the rear wheel is partially omitted in the left half.

In addition, in the drawings, an arrow Fr indicates a front side in a vehicle-front-rear direction, and an arrow R and an arrow L indicate a right side and a left side in a vehicle width direction when an occupant faces the front side of the vehicle. In addition, an arrow U indicates an upper side in a vehicle-up-down direction, and the arrow D indicates the lower side in the vehicle-up-down direction. In addition, "front" and "rear" in the embodiment correspond to the front and rear with respect to a vehicle-front-rear direction.

A rear suspension structure of a vehicle 100 according to the present embodiment is an independent suspension multi-link type of rear suspension structure for rear wheels W of a four-wheel vehicle. In the present embodiment, the rear suspension structure of the vehicle 100 shall be applied to a rear suspension structure of a vehicle in which at least the rear wheel W is motor-driven. The rear suspension structure of the vehicle 100 shall be applied as a rear suspension structure for each of left and right rear wheels W; and the left rear suspension structure and the right rear suspension structure have the same structure (shape) except a point that both structures are formed mutually symmetrically with respect to the vehicle width direction (left-right direction).

Referring to Figure 1 and Figure 2, the rear suspension structure of the vehicle 100 includes a knuckle 1, an upper link 2A, a lower link 3A having a front lower arm 3 and a rear lower arm 4, and a toe control arm 5. In the following, any one of the left rear suspension structure and the right rear suspension structure in the rear suspension structure of the vehicle 100 will be described, but the following configuration may also be applied to other structures.

In the present embodiment, the upper link 2A is formed of one (single) upper arm 2. Accordingly, the rear suspension structure of the vehicle 100 is a four-link multi-link type of rear suspension structure having four link arms (2, 3, 4 and 5) for one rear wheel W.

The knuckle 1 is a member that rotatably supports the rear wheel W of the vehicle. The knuckle 1 is connected to vehicle body (not shown) of the vehicle via the four link arms (2, 3, 4 and 5). The vehicle body that is an object to be connected is a portion constituting a bottom portion among structural members of the vehicle (in other words, bottom portion of the vehicle body).

The rear wheel W that is an object to be supported by the knuckle 1 includes: a hub 7 that is fastened to one end portion 6a of a drive shaft 6 on a rear wheel side; a wheel 8 that is fastened to the hub 7; and a tire T that is attached to the wheel 8. The knuckle 1 is a member that rotatably supports one end portion 6a of the drive shaft 6 and the hub 7; and is connected to the vehicle body via the upper link 2A and the lower link 3A, so as to be movable mainly in the up-down direction in association with the extension and retraction of the suspension (suspension stroke). An electric motor (not shown) is connected to the other end portion (inner end portion in vehicle width direction) of the drive shaft 6; and a driving force from the electric motor is transmitted to the rear wheel W via the drive shaft 6 and the hub 7.

The upper link 2A is a member that connects an upper portion of the knuckle 1 with the vehicle body of the vehicle. In the present embodiment, the upper link 2A is formed of one upper arm 2, as previously described. In addition, a connecting portion of the upper link 2A (upper arm 2) with the vehicle body branches into two. In other words, the upper arm 2 is a single so-called upper A arm in which a portion in the vehicle body side is divided into two.

The upper arm 2 is substantially positioned above the drive shaft 6. Most of the upper arm 2, except for a portion on the vehicle body side, extends substantially in the vehicle width direction. In addition, the upper arm 2 includes a front upper inner connecting portion 21 and a rear upper inner connecting portion 22 that is positioned rearward of the front upper inner connecting portion 21 in the vehicle-front-rear direction, as connecting portions with the vehicle body (vehicle body connecting portions). The upper arm 2 has an upper outer connecting portion 23, as a connecting portion with the knuckle 1 (knuckle connecting portion).

An upper inner bush 2a that is a rubber bush formed into a substantially cylindrical shape is held by each of the front upper inner connecting portion 21 and the rear upper inner connecting portion 22. In addition, an upper inner swing shaft 2b is inserted through each upper inner bush 2a. The upper inner swing shaft 2b extends along a cylindrical central axis of the upper inner bush 2a, and is held by the upper inner bush 2a. In addition, the front upper inner connecting portion 21 and the rear upper inner connecting portion 22 are connected to the vehicle body via the upper inner bush 2a and the upper inner swing shaft 2b, so as to be swingable substantially with the upper inner swing shaft 2b as the center of the swing.

The upper outer connecting portion 23 is connected to an upper portion of the knuckle 1 via an upper outer joint 2c which is a ball joint. In addition, the upper outer connecting portion 23 is connected to the knuckle 1 so as to be swingable with the ball center of the upper outer joint 2c as the center of the swing.

The lower link 3A is a member that connects a lower portion of the knuckle 1 with the vehicle body, below the upper link 2A. As previously described, the lower link 3A is formed of the front lower arm 3 and a rear lower arm 4. In other words, the lower link 3A is formed of two so-called lower A arms.

The lower link 3A is also a member that holds the lower end portion of a coil spring 9. Furthermore, the lower link 3A is also a member that holds a lower end portion of a shock absorber 10. In the present embodiment, the lower end portion of the coil spring 9 and the lower end portion of the shock absorber 10 are supported by the rear lower arm 4 of the lower link 3A. Specifically, the lower end portion of the coil spring 9 is supported by a spring seat portion that is formed in a middle in the longitudinal direction of the rear lower arm 4. The lower end portion of the shock absorber 10 is supported by an absorber seat portion that is formed in a portion of the rear lower arm 4 which is positioned outward in the vehicle width direction with respect to the spring seat portion. In addition, an upper end portion of the coil spring 9 and an upper end portion of the shock absorber 10 are connected to the vehicle body.

The front lower arm 3 extends so as to leave from the drive shaft 6 as heading to the inside in the vehicle width direction, in front of the drive shaft 6, in plan view viewed from above the vehicle. The front lower arm 3 includes: a front lower inner connecting portion 31 as a connecting portion with the vehicle body (vehicle body connecting portion); and a front lower outer connecting portion 32 as a connecting portion with the knuckle 1 (knuckle connecting portion).

A front lower inner bush 3a which is a rubber bush formed into a substantially cylindrical shape is held by the front lower inner connecting portion 31. In addition, a front lower inner swing shaft 3b is inserted through the front lower inner bush 3a. The front lower inner swing shaft 3b extends along a cylindrical central axis of the front lower inner bush 3a, and is supported by the vehicle body in a state of being inserted into the front lower inner bush 3a. In addition, the front lower inner connecting portion 31 is connected to the vehicle body via the front lower inner bush 3a and the front lower inner swing shaft 3b, so as to be swingable substantially with the front lower inner swing shaft 3b as the center of the swing.

A front lower outer bush 3c which is a rubber bush formed into a substantially cylindrical shape is held by the front lower outer connecting portion 32. In addition, a front lower outer swing shaft 3d is inserted through the front lower outer bush 3c. The front lower outer swing shaft 3d extends along a cylindrical central axis of the front lower outer bush 3c, and is supported by the knuckle 1 in a state of being inserted into the front lower outer bush 3c. In addition, the front lower outer connecting portion 32 is connected to a front side part of the lower portion of the knuckle 1 via the front lower outer bush 3c and the front lower outer swing shaft 3d, so as to be swingable substantially with the front lower outer swing shaft 3d as the center of the swing.

The rear lower arm 4 is arranged rearward of the front lower arm 3 in the vehicle-front-rear direction. The rear lower arm 4 extends so as to depart from the drive shaft 6 as it heads to the inside in the vehicle width direction, at the rear of the drive shaft 6, in plan view viewed from above the vehicle. In other words, the drive shaft 6 is positioned between the front lower arm 3 and the rear lower arm 4, in plan view viewed from above the vehicle. In addition, the rear lower arm 4 includes: a rear lower inner connecting portion 41 as a connecting portion with the vehicle body (vehicle body connecting portion); and a rear lower outer connecting portion 42 as a connecting portion with the knuckle 1 (knuckle connecting portion).

A rear lower inner bush 4a which is a rubber bush formed into a substantially cylindrical shape is held by the rear lower inner connecting portion 41. In addition, a rear lower inner swing shaft 4b is inserted through the rear lower inner bush 4a. The rear lower inner swing shaft 4b extends along a cylindrical central axis of the rear lower inner bush 4a and is supported by the vehicle body in a state of being inserted into the rear lower inner bush 4a. In addition, the rear lower inner connecting portion 41 is connected to the vehicle body via the rear lower inner bush 4a and the rear lower inner swing shaft 4b, so as to be swingable substantially with the rear lower inner swing shaft 4b as the center of the swing.

A rear lower outer bush 4c which is a rubber bush formed into a substantially cylindrical shape is held by the rear lower outer connecting portion 42. In addition, a rear lower outer swing shaft 4d is inserted through the rear lower outer bush 4c. The rear lower outer swing shaft 4d extends along a cylindrical central axis of the rear lower outer bush 4c, and is held by the knuckle 1 in a state of being inserted into the rear lower outer bush 4c. In addition, the rear lower outer connecting portion 42 is connected to a rear side part of the lower portion of the knuckle 1 via the rear lower outer bush 4c and the rear lower outer swing shaft 4d, so as to be swingable substantially with the rear lower outer swing shaft 4d as the center of the swing.

The toe control arm 5 is an arm that reduces a change in a toe angle of the rear wheel W. The toe control arm 5 includes: a toe control inner connecting portion 51 as a connecting portion with the vehicle body (vehicle body connecting portion); and a toe control outer connecting portion 52 as a connecting portion with the knuckle 1 (knuckle connecting portion).

A toe control inner bush 5a which is a rubber bush formed into a substantially cylindrical shape is held by the toe control inner connecting portion 51. In addition, a toe control inner swing shaft 5b is inserted through the toe control inner bush 5a. The toe control inner swing shaft 5b extends along a cylindrical central axis of the toe control inner bush 5a, and is supported by the vehicle body in a state of being inserted into the toe control inner bush 5a. In addition, the toe control inner connecting portion 51 is connected to the vehicle body via the toe control inner bush 5a and the toe control inner swing shaft 5b, so as to be swingable substantially with the toe control inner swing shaft 5b as the center of the swing.

The toe control outer connecting portion 52 is connected to a rear portion of the knuckle 1 via a toe control outer joint 5c which is a ball joint. In addition, the toe control outer connecting portion 52 is connected to the rear portion of the knuckle 1, so as to be swingable with the ball center of the toe control outer joint 5c as the center of the swing. Note that details of a portion at which the toe control arm 5 is arranged will be described later.

Incidentally, there are many cases in which equipment such as a large battery and an electric motor are set closer to a rear side of a bottom portion of the vehicle, along with a recent trend toward electric vehicles and the like. However, in the multi-link type of rear suspension structure in which the plurality of link arms extends inward in the vehicle width direction from the vicinity of the rear wheel, a layout and a size of equipment such as a battery may be limited. In this regard, the rear suspension structure of the vehicle 100 of the present embodiment has a configuration described below, in order to improve the flexibility in the layout and size of equipment such as the battery.

Next, the configuration of the rear suspension structure of the vehicle 100 will be described in detail with reference to Figure 1 to Figure 3. Figure 3 is a side view of the rear suspension structure of the vehicle 100 viewed from the outer side in the vehicle width direction. Figure 3 shows a rear suspension structure of the vehicle 100 for a left rear wheel. In Figure 3, the tire T and the wheel 8 of the left rear wheel are removed.

Referring to Figure 1 and Figure 2, the front lower inner connecting portion 31 which is a connecting portion of the front lower arm 3 with the vehicle body is positioned on an outer side in the vehicle width direction than the rear lower inner connecting portion 41 which is a connecting portion of the rear lower arm 4 with the vehicle body, in plan view viewed from one side in the vehicle-front-rear direction (rearward in case of Figure 2). In addition, the front lower arm 3 is positioned in front of the rear lower arm 4. Accordingly, a lower link inner virtual swing axial line X1 which is a virtual line passing through the center C1 of the front lower inner connecting portion 31 and the center C2 of the rear lower inner connecting portion 41 extends in a direction leaving from a center line Xc in the vehicle width direction of the vehicle body as heading to the front lower inner connecting portion 31 from the rear lower inner connecting portion 41, in plan view, viewed from one side in the vehicle-up-down direction. The lower link 3A (front lower arm 3 and rear lower arm 4) can swing as a whole, in the vehicle-up-down direction, substantially with the lower link inner virtual swing axial line X1 as the center.

In other words, the lower link inner virtual swing axial line X1 passes through centers (C1 and C2) of inner bushes of the front and rear lower arms (3 and 4). In addition, the lower link inner virtual swing axial line X1 is non-parallel to the center line Xc in the vehicle width direction of the vehicle body, in plan view, viewed from above the vehicle; and is inclined so as to open toward an outer side of the vehicle width direction as heading to the front side.

Specifically, the center C1 of the front lower inner connecting portion 31 is positioned on the cylindrical central axis of the front lower inner bush 3a, and is a point positioned at the center in the width direction of the front lower inner connecting portion 31 in an extending direction of the front lower inner swing shaft 3b. The center C2 of the rear lower inner connecting portion 41 is positioned on the cylindrical central axis of the rear lower inner bush 4a, and is a point positioned at the center in the width direction of the rear lower inner connecting portion 41 in an extending direction of the rear lower inner swing shaft 4b.

In the present embodiment, the front lower inner connecting portion 31 is positioned on the outer side in the vehicle width direction than the center position of the rear lower arm 4 in the vehicle width direction, in plan view, viewed from one side in the vehicle-front-rear direction. An arm length of the front lower arm 3 is shorter than an arm length of the rear lower arm 4, and is set to nearly half of the arm length of the rear lower arm 4. In addition, an angle of front opening of the lower link inner virtual swing axial line X1 with respect to the center line Xc in the vehicle width direction is set so that the front lower inner connecting portion 31 (front lower inner bush 3a) is positioned on the outer side in the vehicle width direction than a center position of the rear lower arm 4 (not at the position corresponding to half the arm length) in the vehicle width direction.

In the present embodiment, when a virtual vertical plane V is defined that passes through an arm intersection point Z1 which is an intersection point between a central axial line L1 of the front lower arm 3 and a central axial line L2 of the rear lower arm 4, and extends in the vehicle-up-down direction and the vehicle-front-rear direction, the lower link inner virtual swing axial line X1 intersects with the virtual vertical plane V. In addition, referring to Figure 3, a lower link instantaneous rotation center Z2 which is an intersection point of the lower link inner virtual swing axial line X1 and the virtual vertical plane V (in other words, side view instantaneous swing center Z2 of lower link 3A) is positioned at a more forward side of the vehicle than the rear wheel W, in plan view (side view), viewed from one side in the vehicle width direction (in the drawing, from outer side in the vehicle width direction). The lower link instantaneous rotation center Z2 is an instantaneous rotation center of the lower link 3A in a side view, at the time of extension and retraction of the coil spring 9 and the shock absorber 10. In other words, the entirety of the lower link 3A moves in an arc (rotates) in a side view, and the instantaneous center of this arcuate movement becomes the lower link instantaneous rotation center Z2.

Here, for example, suppose that the rear wheel W does not touch the ground but floats in the air. In this case, the vertical movement of the rear wheel W in association with the extension and retraction of the coil spring 9 and the shock absorber 10 becomes the movement in an arcuate shape in a precise sense, by the four-joint link mechanism that is formed of the virtual trailing arm which connects the lower link instantaneous rotation center Z2 with the arm intersection point Z1, the upper link 2A, the knuckle 1 and the vehicle body, in a side view viewed from the outer side in the vehicle width direction. In other words, when the suspension extends and retracts, the rear wheel W moves in an arc so that the center in a radial direction of the rear wheel W follows an arcuate locus by the four-joint link mechanism (in other words, is restrained by the four-joint link mechanism). In addition, the arcuate movement of the rear wheel W is mainly defined by the lower link 3A, and the lower link 3A functions as if being a trailing arm which extends forward of the rear wheel W.

In the present embodiment, the lower link instantaneous rotation center Z2 is positioned in an under-pillar side sill region Sa below a center pillar B1 which extends in the up-down direction of the vehicle body. The under-pillar side sill region Sa is a portion of the side sill B2 that extends in the vehicle-front-rear direction and forms the lower edge of the vehicle door opening, the portion being adjacent to a lower end region Sb of the center pillar B1; and the lower link instantaneous rotation center Z2 is positioned in the vicinity of the lower end of the center pillar B1. As a result, the lower link instantaneous rotation center Z2 is shifted to the under-pillar side sill region Sa which is positioned in front of the rear wheel W in the vehicle-front-rear direction. Accordingly, though the lower link 3A does not actually extend to the front of the rear wheel W, the lower link 3A functions as a long virtual trailing arm, and secures a long virtual trailing arm length. Note that, as for the vehicle-up-down direction, the lower link instantaneous rotation center Z2 is positioned at a height position nearly equal to the center of the radial direction of the rear wheel W.

In the present embodiment, the front lower inner connecting portion 31, the connecting portions of the upper link 2A with the vehicle body (front upper inner connecting portion 21 and rear upper inner connecting portion 22) and the rear lower inner connecting portion 41 are arranged so as to form a row in plan view, viewed from one side in the vehicle-up-down direction. In other words, the inner connecting portions of the upper link 2A and the lower link 3A (2, 3, and 4) are arranged in the order of the front lower inner connecting portion 31, the front upper inner connecting portion 21, the rear upper inner connecting portion 22, and the rear lower inner connecting portion 41, from the front in the vehicle-front-rear direction; and as for the vehicle width direction, are arranged in the order of the front lower inner connecting portion 31, the front upper inner connecting portion 21, the rear upper inner connecting portion 22, and the rear lower inner connecting portion 41, from the outer side.

Specifically, the connecting portions of the upper link 2A with the vehicle body (front upper inner connecting portion 21 and rear upper inner connecting portion 22) are arranged along the lower link inner virtual swing axial line X1, in plan view viewed from above the vehicle. Accordingly, an upper link inner virtual swing axial line X2 that is a virtual line which passes through the center C3 of the front upper inner connecting portion 21 and the center C4 of the rear upper inner connecting portion 22 is inclined so as to be substantially parallel to and close to the lower link inner virtual swing axial line X1 and so as to open toward the outer side in the vehicle width direction as heading to the front side, in plan view viewed from one side in the vehicle-up-down direction. In addition, the upper link 2A can swing substantially in the vehicle-up-down direction, with the upper link inner virtual swing axial line X2 as the center, which is approximately parallel to and close to the lower link inner virtual swing axial line X1. Accordingly, a swing radius of the upper link 2A that is projected on the virtual plane perpendicular to the lower link inner virtual swing axial line X1 is controlled to be substantially equal to the swing radius of the lower link 3A that is projected on the virtual plane perpendicular to the lower link inner virtual swing axial line X1.

Specifically, the center C3 of the front upper inner connecting portion 21 is a point that is positioned on a cylindrical central axis of the upper inner bush 2a of the front upper inner connecting portion 21, and is also positioned at the center in the width direction of the front upper inner connecting portion 21, in the extending direction of the upper inner swing shaft 2b of the front upper inner connecting portion 21. The center C4 of the rear upper inner connecting portion 22 is a point that is positioned on the cylindrical central axis of the upper inner bush 2a of the rear upper inner connecting portion 22, and is also positioned at the center in the width direction of the rear upper inner connecting portion 22, in the extending direction of the upper inner swing shaft 2b of the rear upper inner connecting portion 22. Accordingly, the four inner bush centers (C1, C3, C4 and C2) of the upper link 2A and the lower link 3A (2, 3, and 4) are arranged substantially along the lower link inner virtual swing axial line X1 in plan view as viewed from above the vehicle.

Note that, in the front upper inner connecting portion 21 and the rear upper inner connecting portion 22 which are two connecting portions of the upper link 2A with the vehicle body, the upper inner swing shaft 2b of the front upper inner connecting portion 21 and the upper inner swing shaft 2b of the rear upper inner connecting portion 22 extend in parallel with each other and with the same axis. However, the respective inner swing shafts (3b, 2b and 4b) of the front lower inner connecting portion 31, the connecting portions of the upper link 2A with the vehicle body (front upper inner connecting portion 21 and rear upper inner connecting portion 22), and the rear lower inner connecting portion 41 do not extend in parallel to each other. The front lower inner swing shaft 3b takes a front-opening attitude in which the front end of itself is positioned on the outer side in the vehicle width direction with respect to the lower link inner virtual swing axial line X1. The rear lower inner swing shaft 4b takes a rear-opening attitude in which the rear end of itself is positioned on the outer side in the vehicle width direction with respect to the lower link inner virtual swing axial line X1. On the other hand, each of the upper inner swing shafts 2b takes a front-opening attitude that is parallel to the lower link inner virtual swing axial line X1. In other words, in the present embodiment, the front lower inner swing shaft 3b, the rear lower inner swing shaft 4b, and the upper inner swing shaft 2b do not extend parallel to each other when viewed from above the vehicle, and the angles of the swing shafts (3b, 4b and 2b) with respect to the lower link inner virtual swing axial line X1 are different for each swing shaft.

In the present embodiment, the toe control arm 5 is arranged rearward of the vehicle with respect to the front lower arm 3, the rear lower arm 4 and the upper link 2A, in plan view as viewed from one side in the vehicle-up-down direction. In addition, a toe control inner connecting portion 51 that is a connecting portion of the toe control arm 5 with the vehicle body is arranged so as to form a row together with the front lower inner connecting portion 31, the connecting portions of the upper link 2A with the vehicle body (front upper inner connecting portion 21 and rear upper inner connecting portion 22), and the rear lower inner connecting portion 41, in plan view as viewed from one side in the vehicle-up-down direction. In other words, the inner connecting portions of the four link arms (2, 3, 4, and 5) are arranged in the order of the front lower inner connecting portion 31, the front upper inner connecting portion 21, the rear upper inner connecting portion 22, the rear lower inner connecting portion 41, and the toe control inner connecting portion 51, from the front in the vehicle-front-rear direction; and as for the vehicle width direction, are arranged in the order of the front lower inner connecting portion 31, the front upper inner connecting portion 21, the rear upper inner connecting portion 22, the rear lower inner connecting portion 41, and the toe control inner connecting portion 51, from the outer side.

The toe control inner connecting portion 51 is arranged along the lower link inner virtual swing axial line X1 in plan view viewed from above the vehicle, at the rear of the rear lower inner connecting portion 41. In other words, the center C5 of the toe control inner connecting portion 51 is also close to the lower link inner virtual swing axial line X1, in plan view viewed from above the vehicle. Accordingly, also for the toe control arm 5, a swing radius of the toe control arm 5 that is projected on the virtual plane perpendicular to the lower link inner virtual swing axial line X1 is controlled to be substantially equal to the swing radius of the lower link 3A that is projected on the virtual plane perpendicular to the lower link inner virtual swing axial line X1. As a result, the swing radii of the four link arms (2, 3, 4 and 5) are controlled so as to be substantially equal to each other, and a swing trajectory of the toe control arm 5 at the time of the extension and retraction of the suspension is brought close to a swing trajectory of the upper link 2A and a swing trajectory of the lower link 3A.

Specifically, the center C5 of the toe control inner connecting portion 51 is positioned on the cylindrical central axis of the toe control inner bush 5a, and is a point positioned at the center in the width direction of the toe control inner connecting portion in an extending direction of the toe control inner swing shaft 5b. Accordingly, the five inner bush centers (C1, C3, C4, C2 and C5) are arranged substantially along the lower link inner virtual swing axial line X1 in plan view viewed from above the vehicle.

Next, effects of the rear suspension structure of the vehicle 100 according to the present embodiment will be described.

According to the rear suspension structure of the vehicle 100 of the present embodiment, the front lower inner connecting portion 31 of the front lower arm 3 is positioned in the outer side in the vehicle width direction than the rear lower inner connecting portion 41 of the rear lower arm 4, in plan view viewed from one side in the vehicle-front-rear direction. Thereby, a wide space is secured on the inner side in the vehicle width direction of the left and right front lower inner connecting portions 31 and 31, and constraints on the layout and size can be reduced for equipment such as the battery that can be mounted closer to the rear side of the bottom portion of the vehicle. As a result, for example, even in a small automobile having a narrow vehicle width, the flexibility in the layout and size of a drive unit (power train) can be improved, which includes the battery and the electric motor that can be mounted in a region closer to the rear side of the bottom portion of the vehicle.

As described above, the rear suspension structure of the vehicle 100 according to the present embodiment has a structure that can improve the flexibility in the layout of equipment and size of equipment such as the battery in the region closer to the rear side of the bottom portion of the vehicle. In addition, for example, in the case of medium and large automobiles and the like, some of the space inside the left and right front lower inner connecting portions 31 and 31 can be used in order to expand a compartment space.

In the present embodiment, the front lower inner connecting portion 31 is positioned on the outer side in the vehicle width direction than the center position of the rear lower arm 4 in the vehicle width direction, in plan view viewed from one side in the vehicle-front-rear direction. Thereby, the flexibility in the layout and size of mounted equipment in the region closer to the rear side of the bottom portion of the vehicle can be effectively improved.

In the present embodiment, the lower link instantaneous rotation center Z2 which is the intersection point of the lower link inner virtual swing axial line X1 and the virtual vertical plane V is positioned in the under-pillar side sill region Sa below the center pillar B1 of the vehicle body, in plan view viewed from one side in the vehicle width direction. Thereby, though the lower link 3A does not actually extend to the front of the rear wheel W, the lower link 3A functions as the long virtual trailing arm, and secures the long virtual trailing arm length. As a result, the arc radius of the arcuate locus of the arcuate movement in the side view of the rear wheel W (in other words, wheel center) becomes long at the time of the extension and retraction of the suspension. Accordingly, changes in the wheel base and the wheel alignment at the time of the extension and retraction of the suspension can be reduced, and handling and stability can be enhanced. In addition, an actual trailing arm does not exist in front of the rear wheel W, and accordingly space in front of the rear wheel W can be utilized for other purposes, for example, such as expansion of the compartment, and expansion of a mounting region for auxiliary devices such as the battery. In this way, both the enhancement of handling and stability and effective utilization of space in front of the rear wheel W can be achieved.

In the present embodiment, the front lower inner connecting portion 31, the connecting portions of the upper link 2A with the vehicle body (front upper inner connecting portion 21 and rear upper inner connecting portion 22) and the rear lower inner connecting portion 41 are arranged so as to form a row, in plan view viewed from one side in the vehicle-up-down direction. Thereby, as in the present embodiment, the angles of the swing shafts (3b, 4b and 2b) with respect to the lower link inner virtual swing axial line X1 are different for the respective swing shafts, and when the suspension extends and retracts, even in the case in which the corresponding inner bushes (3a, 4a and 2a) can be compressed from the inside in a state in which the swing shafts (3b, 4b and 2b) are inclined with respect to the cylindrical central axes of the respective bushes, the amount of compression of the bushes can be reduced, and the frictional resistance between the inner bushes and the swing shafts can be reduced. As a result, the ride comfort of the vehicle can be enhanced. In addition, the inclination of the swing shafts (3b, 4b and 2b) with respect to the cylindrical central axes of the bushes can be reduced at the time when the bush is compressed. As a result, the required volume of the inner bushes (3a, 4a and 2a) corresponding to the extension and retraction of the suspension, and the required arm length (link length) of each link arm (2, 3 and 4) corresponding to the extension and retraction of the suspension are reduced; and accordingly, a suspension structure is reduced in size, and a space-saving and effective suspension structure is provided. Thereby, even in a small automobile having a narrow vehicle width, the flexibility in the layout and size of a drive unit (power train) including a battery and an electric motor that can be mounted in a region closer to the rear side of the bottom portion of the vehicle can be more effectively enhanced.

In the present embodiment, the toe control arm 5 is arranged rearward of the vehicle with respect to the front lower arm 3, the rear lower arm 4 and the upper link 2A, in plan view viewed from one side in the vehicle-up-down direction; and the toe control inner connecting portion 51 is arranged so as to form a row together with the front lower inner connecting portion 31, the connecting portions (21 and 22) of the upper link 2A with the vehicle body, and the rear lower inner connecting portion 41, in plan view viewed from one side in the vehicle-up-down direction. Thereby, the swing trajectory of the toe control arm 5 at the time of the extension and retraction of the suspension is brought close to the swing trajectory of the upper link 2A and the swing trajectory of the lower link 3A; and as a result, a change in the toe angle of the rear wheel W at the time of the extension and retraction of the suspension can be more effectively reduced.

The description of the present embodiment is an example for describing the present invention, and it does not limit the invention as claimed in the claims. In addition, the configuration of each part of the present invention is not limited to the above embodiment, and various modifications can be made within the technical scope as claimed in the claims.

For example, the coil spring 9 and the shock absorber 10 are held by the rear lower arm 4, but they are not limited to this configuration, and they may also be held by the front lower arm 3. In addition, the lower link instantaneous rotation center Z2 may be positioned not only in the under-pillar side sill region Sa, but also in the lower end region Sb of the center pillar B1.

In addition, the upper link 2A is not limited to the one upper arm 2 in which the connecting portion with the vehicle body branches into two, but it may be divided into two arms in the front and rear as a whole, similarly to the lower link 3A. In this case, the upper link 2A includes a front upper arm and a rear upper arm; and an upper inner bush 2a and an upper inner swing shaft 2b are provided at a connecting portion of each upper arm with the vehicle body, an upper outer joint 2c is provided at a connecting portion of the front upper arm with a front side part of an upper portion of the knuckle 1, and an upper outer joint 2c is also provided at a connecting portion of the rear upper arm with a rear side part of the upper portion of the knuckle 1. In this case, the rear suspension structure for the vehicle 100 is a five-link multi-link type of rear suspension structure having five link arms for one rear wheel W.

### [Reference Signs List]

- 1: knuckle,
- 2A: upper link,
- 2: upper arm,
- 2a: upper inner bush,
- 2b: upper inner swing shaft,
- 2c: upper outer joint,
- 21: front upper inner connecting portion,
- 22: rear upper inner connecting portion,
- 23: upper outer connecting portion,
- 3A: lower link,
- 3: front lower arm,
- 3a: front lower inner bush,
- 3b: front lower inner swing shaft,
- 3c: front lower outer bush,
- 3d: front lower outer swing shaft,
- 31: front lower inner connecting portion,
- 32: front lower outer connecting portion,
- 4: rear lower arm,
- 4a: rear lower inner bush,
- 4b: rear lower inner swing shaft,
- 4c: rear lower outer bush,
- 4d: rear lower outer swing shaft,
- 41: rear lower inner connecting portion,
- 42: rear lower outer connecting portion,
- 5: toe control arm,
- 5a: toe control inner bush,
- 5b: toe control inner swing shaft,
- 5c: toe control outer joint,
- 51: toe control inner connecting portion,
- 52: toe control outer connecting portion,
- 6: drive shaft,
- 6a: one end portion,
- 7: hub,
- 8: wheel,
- 9: coil spring,
- 10: shock absorber,
- 100: rear suspension structure for vehicle,
- B1: center pillar,
- B2: side sill,
- C1: center of front lower inner connecting portion,
- C2: center of rear lower inner connecting portion,
- C3: center of front upper inner connecting portion,
- C4: center of rear upper inner connecting portion,
- C5: center of toe control inner connecting portion,
- L1: central axial line of front lower arm,
- L2: central axial line of rear lower arm,
- Sa: under-pillar side sill region,
- Sb: lower end region of center pillar,
- V: virtual vertical plane,
- W: rear wheel,
- Xc: center line in vehicle width direction of vehicle body,
- X1: lower link inner virtual swing axial line,
- X2: upper link inner virtual swing axial line,
- Z1: arm intersection point (intersection point between central axial line of front lower arm and central axial line of rear lower arm),
- Z2: lower link instantaneous rotation center (intersection point of lower arm inner virtual swing axial line and virtual vertical plane).

## Claims

1. A vehicle having a rear suspension structure (100), the rear suspension structure comprising:
a knuckle (1) that rotatably supports a rear wheel (W) of the vehicle;
an upper link (2A) that connects an upper portion of the knuckle with a vehicle body of the vehicle;
a lower link (3A) that connects a lower portion of the knuckle with the vehicle body, below the upper link, also holds a lower end portion of a coil spring (9), and includes a front lower arm (3), and a rear lower arm (4) that is arranged rearward of the front lower arm in a vehicle-front-rear direction, and
a toe control arm (5) that reduces a change in a toe angle of the rear wheel (W), and is arranged rearward of the vehicle with respect to the front lower arm (3), the rear lower arm (4), and the upper link (2A), in plan view, viewed from one side in the vehicle-up-down direction, **characterized in that**
a front lower inner connecting portion (31) that is a connecting portion of the front lower arm with the vehicle body is positioned on an outer side in a vehicle width direction than a rear lower inner connecting portion (41) which is a connecting portion of the rear lower arm with the vehicle body, in plan view, viewed from one side in the vehicle-front-rear direction, and
the front lower inner connecting portion (31) is positioned on the outer side in the vehicle width direction than the center position of the rear lower arm (4) in the vehicle width direction, in plan view, viewed from one side in the vehicle-front-rear direction,
when a virtual vertical plane (V) is defined that passes through an intersection point (Z1) between a central axial line (L1) of the front lower arm and a central axial line (L2) of the rear lower arm, and extends in a vehicle-up-down direction and the vehicle-front-rear direction,
a lower link inner virtual swing axial line (X1) that passes through a center (C1) of the front lower inner connecting portion and a center (C2) of the rear lower inner connecting portion intersects with the virtual vertical plane (V), and
an intersection point (Z2) between the lower link inner virtual swing axial line (X1) and the virtual vertical plane (V) is positioned in a lower end region (Sb) of a center pillar (B1) of the vehicle body or an under-pillar side sill region (Sa) below the center pillar, in plan view, viewed from one side in the vehicle width direction,
the front lower inner connecting portion (31), a connecting portion (21, 22) of the upper link with the vehicle body, and the rear lower inner connecting portion (41) are arranged so as to form a row, in plan view, viewed from one side in the vehicle-up-down direction,
a toe control inner connecting portion (51) that is a connecting portion of the toe control arm with the vehicle body is arranged so as to form a row together with the front lower inner connecting portion (31), the connecting portion (21, 22) of the upper link with the vehicle body, and the rear lower inner connecting portion (41), in plan view, viewed from one side in the vehicle-up-down direction, and
the front lower arm (3) extends, in front of a drive shaft (6) that transmits a driving force to the rear wheel (W), so as to depart from the drive shaft (6) as heading to an inside in the vehicle width direction, and the rear lower arm (4) extends, at the rear of the drive shaft (6), so as to depart from the drive shaft (6) as heading to an inside in the vehicle width direction.

2. The vehicle according to claim 1, wherein
the upper link (2A) is formed of one upper arm (2), and
the connecting portion (21, 22) of the upper link with the vehicle body is branched into two portions.

## Patentansprüche

1. Fahrzeug mit einer Radaufhängungsstruktur hinten (100), wobei die Radaufhängungsstruktur hinten umfasst:
einen Achsschenkel (1), der ein Hinterrad (W) des Fahrzeugs drehbar lagert;
einen oberen Lenker (2A), der einen oberen Abschnitt des Achsschenkels mit einer Fahrzeugkarosserie des Fahrzeugs verbindet;
einen unteren Lenker (3A), der einen unteren Abschnitt des Achsschenkels mit der Fahrzeugkarosserie unter dem oberen Lenker verbindet, auch einen unteren Endabschnitt einer Schraubenfeder (9) hält und einen vorderen unteren Arm (3) und einen hinteren unteren Arm (4) aufweist, der in einer Fahrzeug-Vorne-Hinten-Richtung hinter dem vorderen unteren Arm angeordnet ist, und
einen Spurkontrollarm (5), der eine Änderung eines Spurwinkels des Hinterrads (W) verringert und in Draufsicht, aus einer Richtung in der Fahrzeug-Hoch-Tief-Richtung gesehen, in Bezug auf den vorderen unteren Arm (3), den hinteren unteren Arm (4) und den oberen Lenker (2A) fahrzeughinten angeordnet ist, **dadurch gekennzeichnet, dass**:
ein vorderer unterer innerer Verbindungsabschnitt (31), der ein Verbindungsabschnitt des vorderen unteren Arms mit der Fahrzeugkarosserie ist, in Draufsicht, aus einer Richtung in der Fahrzeug-Vorne-Hinten-Richtung gesehen, auf einer in einer Fahrzeugbreitenrichtung weiter außen liegenden Seite angeordnet ist als ein hinterer unterer innerer Verbindungsabschnitt (41), der ein Verbindungsabschnitt des hinteren unteren Arms mit der Fahrzeugkarosserie ist, und
der vorderer untere innere Verbindungsabschnitt (31) in Draufsicht, aus einer Richtung in der Fahrzeug-Vorne-Hinten-Richtung gesehen, auf der in der Fahrzeugbreitenrichtung weiter außen liegenden Seite angeordnet ist als die Mittelposition des hinteren unteren Arms (4) in der Fahrzeugbreitenrichtung,
wenn eine virtuelle vertikale Ebene (V) definiert ist, die durch einen Schnittpunkt (Z1) zwischen einer zentralen Achslinie (L1) des vorderen unteren Arms und einer zentralen Achslinie (L2) des hinteren unteren Arms verläuft und sich in einer Fahrzeug-Hoch-Tief-Richtung und der Fahrzeug-Vorne-Hinten-Richtung erstreckt,
eine untere lenkerinnenseitige virtuelle Schwenkachsenlinie (X1), die durch eine Mitte (C1) des vorderen unteren inneren Verbindungsabschnitts und eine Mitte (C2) des hinteren unteren inneren Verbindungsabschnitts verläuft, die virtuelle vertikale Ebene (V) schneidet, und
ein Schnittpunkt (Z2) zwischen der unteren lenkerinnenseitigen virtuellen Schwenkachsenlinie (X1) und der virtuellen vertikalen Ebene (V) in Draufsicht, aus einer Richtung in der Fahrzeugbreitenrichtung gesehen, in einem unteren Endbereich (Sb) einer Mittelsäule (B1) der Fahrzeugkarosserie oder einem Untersäulen-Seitenschwellerbereich (Sa) unter der Mittelsäule angeordnet ist,
der vordere untere innere Verbindungsabschnitt (31), ein Verbindungsabschnitt (21, 22) des oberen Lenkers mit der Fahrzeugkarosserie und der hintere untere innere Verbindungsabschnitt (41) so angeordnet sind, dass sie in Draufsicht, aus einer Richtung in der Fahrzeug-Hoch-Tief-Richtung gesehen, eine Reihe bilden,
ein spurkontrollseitiger innerer Verbindungsabschnitt (51), der ein Verbindungsabschnitt des Spurkontrollarms mit der Fahrzeugkarosserie ist, so angeordnet ist, dass er zusammen mit dem vorderen unteren inneren Verbindungsabschnitt (31), dem Verbindungsabschnitt (21, 22) des oberen Lenkers mit der Fahrzeugkarosserie und dem hinteren unteren inneren Verbindungsabschnitt (41) in Draufsicht, aus einer Richtung in der Fahrzeug-Hoch-Tief-Richtung gesehen, eine Reihe bildet, und
der vordere untere Arm (3) sich vor einer Antriebswelle (6), die eine Antriebskraft auf das Hinterrad (W) überträgt, so erstreckt, dass er bei Bewegung nach innen in der Fahrzeugbreitenrichtung von der Antriebswelle (6) wegführt, und der hintere untere Arm (4) sich hinter der Antriebswelle (6) so erstreckt, dass er bei Bewegung nach innen in der Fahrzeugbreitenrichtung von der Antriebswelle (6) wegführt.

2. Fahrzeug nach Anspruch 1, wobei:
der obere Lenker (2A) aus einem oberen Arm (2) gebildet ist, und
der Verbindungsabschnitt (21, 22) des oberen Lenkers mit der Fahrzeugkarosserie in zwei Abschnitte verzweigt ist.

## Revendications

1. Véhicule ayant une structure de suspension arrière (100), la structure de suspension arrière comprenant :
une fusée (1) qui supporte de façon rotative une roue arrière (W) du véhicule ;
une biellette supérieure (2A) qui relie une partie supérieure de la fusée avec une carrosserie de véhicule du véhicule ;
une biellette inférieure (3A) qui relie une partie inférieure de la fusée avec la carrosserie de véhicule, sous la biellette supérieure, maintient également une partie d'extrémité inférieure d'un ressort hélicoïdal (9), et inclut un bras inférieur avant (3), et un bras inférieur arrière (4) qui est disposé en arrière du bras inférieur avant dans une direction avant-arrière de véhicule, et
un bras de pincement (5) qui réduit une variation d'un angle de pincement de la roue arrière (W), et est disposé en arrière du véhicule par rapport au bras inférieur avant (3), au bras inférieur arrière (4) et à la biellette supérieure (2A), en vue en plan, vu depuis un côté dans la direction haut-bas de véhicule, **caractérisé en ce que**
une partie de liaison interne inférieure avant (31) qui est une partie de liaison du bras inférieur avant avec la carrosserie de véhicule est positionnée sur un côté extérieur dans une direction de la largeur de véhicule par rapport à une partie de liaison interne inférieure arrière (41) qui est une partie de liaison du bras inférieur arrière avec la carrosserie de véhicule, en vue en plan, vu depuis un côté dans la direction avant-arrière de véhicule, et
la partie de liaison interne inférieure avant (31) est positionnée sur le côté extérieur dans la direction de la largeur de véhicule par rapport à la position centrale du bras inférieur arrière (4) dans la direction de la largeur de véhicule, en vue en plan, vu depuis un côté dans la direction avant-arrière de véhicule,
lorsqu'un plan vertical virtuel (V) est défini comme passant par un point d'intersection (Z1) entre une ligne axiale centrale (L1) du bras inférieur avant et une ligne axiale centrale (L2) du bras inférieur arrière, et s'étend dans une direction haut-bas de véhicule et la direction avant-arrière de véhicule,
une ligne d'axe d'oscillation virtuelle interne de biellette inférieure (X1) qui passe par un centre (C1) de la partie de liaison interne inférieure avant et un centre (C2) de la partie de liaison interne inférieure arrière coupe le plan vertical virtuel (V), et
un point d'intersection (Z2) entre la ligne d'axe d'oscillation virtuelle interne de biellette inférieure (X1) et le plan vertical virtuel (V) est positionné dans une zone d'extrémité inférieure (Sb) d'un montant central (B1) de la carrosserie de véhicule ou une zone de bas de caisse sous montant (Sa) sous le montant central, en vue en plan, vu depuis un côté dans la direction de la largeur de véhicule,
la partie de liaison interne inférieure avant (31), une partie de liaison (21, 22) de la biellette supérieure avec la carrosserie de véhicule, et la partie de liaison interne inférieure arrière (41) sont disposées de manière à former une rangée, en vue en plan, vu depuis un côté dans la direction haut-bas de véhicule,
une partie de liaison interne de contrôle de pincement (51) qui est une partie de liaison du bras de pincement avec la carrosserie de véhicule est disposée de manière à former une rangée conjointement avec la partie de liaison interne inférieure avant (31), la partie de liaison (21, 22) de la biellette supérieure avec la carrosserie de véhicule, et la partie de liaison interne inférieure arrière (41), en vue en plan, vu depuis un côté dans la direction haut-bas de véhicule, et
le bras inférieur avant (3) s'étend, devant un arbre de transmission (6) qui transmet une force motrice à la roue arrière (W), de façon à s'écarter de l'arbre de transmission (6) tout en se dirigeant vers un intérieur dans la direction de la largeur de véhicule, et le bras inférieur arrière (4) s'étend, à l'arrière de l'arbre de transmission (6), de façon à s'écarter de l'arbre de transmission (6) tout en se dirigeant vers un intérieur dans la direction de la largeur de véhicule.

2. Véhicule selon la revendication 1, dans lequel :
la biellette supérieure (2A) est formée d'un bras supérieur (2), et
la partie de liaison (21, 22) de la biellette supérieure avec la carrosserie de véhicule est ramifiée en deux parties.
